# EUROPEAN PATENT SPECIFICATION

(11) **EP 4 240 641 B1**
(45) Date of publication and mention of the grant of the patent: **30.04.2025**
(21) Application number: 21799105.8
(22) Date of filing: 14.10.2021
(51) Int. Cl.: B62J 6/24, B62H 5/04, B62H 5/08, B60R 25/045, B60R 25/24, B62J 43/30, B62J 50/25, B62J 50/40, B62K 23/02, B62M 7/04

(54) **RIDEABLE SADDLE VEHICLE COMPRISING AN OPTICAL INDICATION DEVICE**
FAHRBARES SATTELFAHRZEUG MIT EINER OPTISCHEN ANZEIGEVORRICHTUNG
VÉHICULE À SELLE CHEVAUCHABLE COMPRENANT UN DISPOSITIF D'INDICATION OPTIQUE

(30) Priority: 03.11.2020 IT 202000026134
(43) Date of publication of application: 13.09.2023
(73) Proprietor: Piaggio & C. SpA, 56025 Pontedera (IT)
(72) Inventor: CUTRI', Niccolò, 56025 Pontedera (IT); FERRARO, Vincenzo, 56025 Pontedera (IT)
(74) Representative: Carangelo, Pierluigi
(86) International application number: PCT/IB2021/059449
(87) International publication number: WO 2022/096969

(56) References cited:
- WO-A1-2019/012706
- WO-A1-2020/183488
- FR-A1- 2 802 889
- US-A1- 2006 131 959
- US-A1- 2018 170 312

## Description

### TECHNICAL FIELD OF THE INVENTION

The present invention relates to the technical field of land transport vehicles and, in particular to a rideable saddle vehicle comprising an optical indication device.

### BACKGROUND OF THE INVENTION

Optical lighting systems that allow the safe use of rideable saddle vehicles, e.g., motorcycles, have been fitted on said motorcycles for a long time. Motorcycles are indeed provided with a headlight, a rear light, turn lights, etc. The headlight allows to illuminate an area of ground in front of the motorcycle and to make the motorcycle visible to people or vehicles located in front of the motorcycle. The rear light allows people or vehicles located behind the motorcycle to see the motorcycle and allow signaling the activation of the braking system.

There are some types of rideable saddle vehicles, e.g., some motorcycles, which can be ignited with the consent of keyless authorization control systems, which generally do not require a hardware ignition key. In this type of vehicle, the ability to ignite the vehicle is enabled by a radio remote control device through which a user actually sends a radio enabling signal. However, it may be difficult for a user to correctly determine whether or not the vehicle can be ignited after sending an enabling signal in conditions of low or no outdoor lighting. FR2802889A1 discloses a rideable saddle vehicle according to the preamble of claim 1.

It is an object of the present invention to provide a rideable saddle vehicle which can overcome at least in part the drawbacks described above with reference to the vehicles of the prior art described above.

It is another object of the present description to provide a vehicle which can be more easily recognized by an observer in low light conditions or the dark.

These and other objects are achieved by means of rideable saddle vehicle as defined in appended independent claim 1. Preferred and advantageous embodiments of the aforesaid vehicle are defined in the appended dependent claims.

The invention will be better understood from the following detailed description of particular embodiments, provided by way of example and consequently not limiting in any manner, with reference to the accompanying drawings which are briefly described below.

### BRIEF DESCRIPTION OF THE DRAWINGS

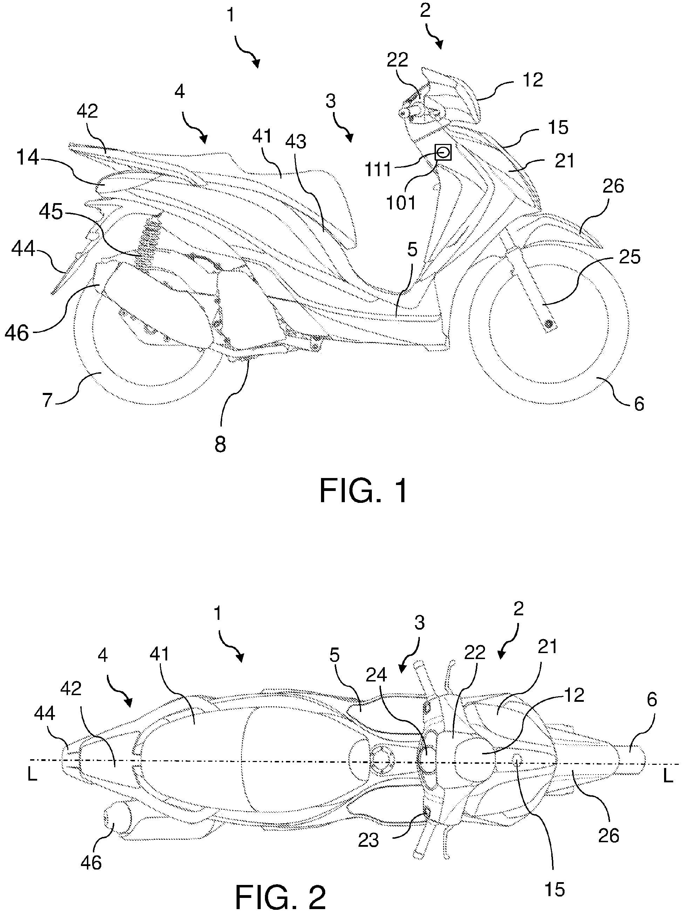

Figure 1 shows a plan side view of a non-limiting example of an embodiment of a rideable saddle vehicle comprising an optical indication device.
Figure 2 shows a plan view of the rideable saddle vehicle in figure 1.

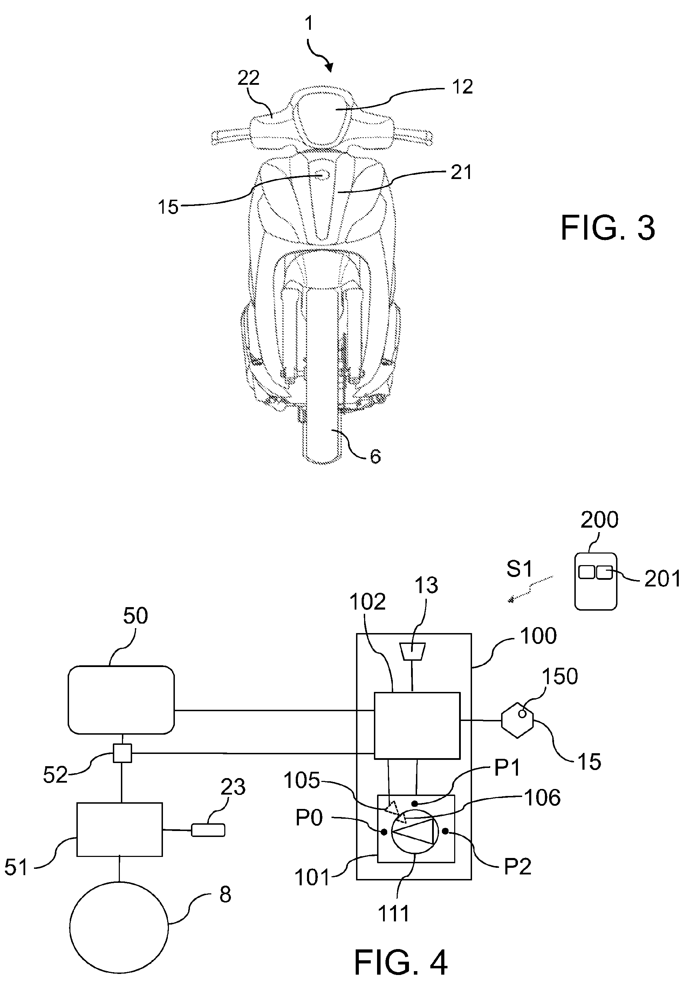

Figure 3 shows a front view of the rideable saddle vehicle in figure 1.
Figure 4 shows a functional block diagram of an example of an embodiment of an authorization control system of the rideable saddle vehicle in figure 1.
Figure 5 shows a top view of the rideable saddle vehicle with associated enlarged views of the backlit logo/trademark.
Figure 6 shows a side view in which a passive recognition of the remote control device is schematically shown.
Figure 6A shows a schematic view of a housing obtained in the vehicle body, as shown in figure 6, into which the remote control device can be inserted.

### DETAILED DESCRIPTION

Similar or equivalent elements in the accompanying figures are indicated using the same reference numerals.

The accompanying figures show an embodiment of a rideable saddle vehicle 1, which in the particular example, without because of this introducing any limitation, consists of a two-wheeled motorcycle, and in particular of a two-wheeled scooter, having a front wheel 6 and a rear wheel 7.

Hereinafter in the present description, reference will be made to a generic motorcycle 1, thereby meaning the following description may apply in general to any type of rideable saddle vehicle comprising:
- a main body 2,3,4;
- at least two wheels 6,7 constrained to the main body 2,3,4;
- an engine 8, e.g., a thermal engine or an electric or hybrid motor, constrained to the main body 2,3,4 and operatively connected, either directly or indirectly, to at least one of the two wheels 6,7.

The main body 2,3,4 of the motorcycle 1 extends along a longitudinal axis L-L, which is parallel to the driving axis of the motorcycle 1, and has a front part 2, a tail part 4, and a central part 3 interposed between the front part 2 and the tail part 4. For example, the central part 3 comprises a treadable footboard 5.

Conveniently, the motorcycle 1, and in particular the tail portion 4, comprises a seat 41 and a supporting portion 43 of the seat 41, and the treadable footboard 5 connects the supporting portion 43 of the seat 41 to the front portion 2 of the motorcycle 1.

In the example, the front part 2 comprises a front shield 21, a steering handlebar 22, the front wheel 6, a front mudguard 26, and a front suspension 25. The front part 2 preferably comprises a control dashboard 24, e.g., integrated into the steering handlebar 22.

In the example, the rear part 4 comprises a luggage rack 42, a rear suspension 45, the rear wheel 7, the traction engine 8, a rear mudguard 44, and an exhaust pipe 46.

The motorcycle 1 comprises at least one headlight 12 fixed to the front part 2 and at least one rear light 14 fixed to the tail part 4. In a situation in which the steering handlebar 22 is not turned, i.e., in the condition in which the front wheel 6 and the rear wheel 7 are aligned along the longitudinal axis L-L, the headlight 12 is such to emit a light beam prevalently directed along the longitudinal axis L-L to illuminate a portion of ground located in front relative to the motorcycle 1. The rear light 14 is such that it emits diffuse, i.e., non-directional, optical radiation.

The motorcycle 1 further comprises an optical indication device 15 fixed to the main body 2,3,4, preferably to the front part 2.

The motorcycle 1 further comprises an authorization control system 100, or more briefly an authorization system 100, adapted to receive a radio signal S1 emitted by a remote control device 200 to authorize the ignition of the vehicle 1. The authorization system 100 comprises a manual control device 101 which, following the reception of the radio signal S1, is movable by a user starting from a locking configuration P0 to take at least one unlocking configuration P1, P2. The authorization system 100 comprises an electronic control unit 102 operatively connected to the optical indication device 15 to switch it on and off.

For example, the remote control device 200 is adapted and configured to emit said radio signal S1 by operating, e.g., pressing or touching, a manual control button 201.

For example, the authorization system 100 comprises a radio communication interface 13 operatively connected to, or integrated into the electronic control unit 102 to receive the radio signal S1 through said interface 13.

The electronic control unit 102 is configured to switch on the optical indication device 15 following the reception of the radio signal S1 and is configured to switch off the optical indication device 15 when one of the following conditions is fulfilled:
- a time interval has elapsed since the optical indication device 15 was switched on without the manual control device 101 being moved from the locking configuration P0 to, or towards, said at least one unlocking configuration P1, P2;
- the manual control device 101 was moved from the locking configuration P0 to, or towards at least one unlocking configuration P1, P2.

Said time interval is preferably less than or equal to 60 s, e.g., less than 30 s, e.g., comprised in the interval from 10 s to 20 s, including the extremes of the interval.

According to an advantageous embodiment, the locking configuration P0 corresponds to a locking position P0 of the manual control device 101, and the at least one unlocking configuration corresponds to at least one unlocking position P1, P2 of the manual control device 101.

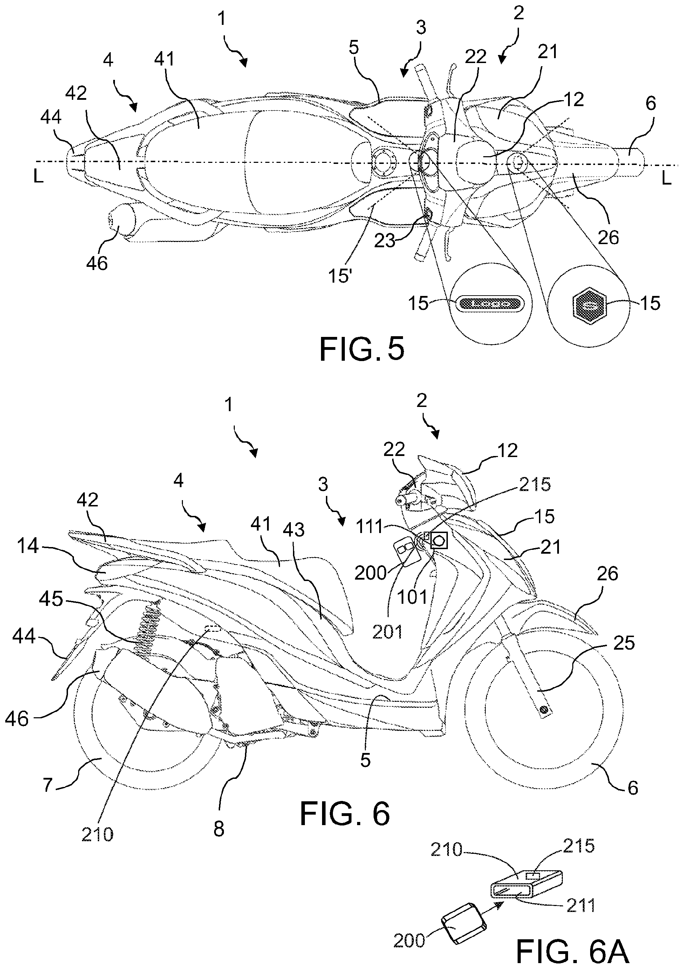

As shown in figure 5, the optical indication device 15 carries at least a logo or trademark of the motorcycle 1 or of its manufacturer.

The optical indication device 15 comprises at least one optical backlight source, e.g., an optical source adapted to backlight said logo or said trademark. For example, said optical source comprises an LED or an array of LEDs. The optical indication device 15 emits a light beam 15' (figure 6) which is projected outside and illuminates the surrounding environment, thus being visible from a distance by a user. In particular, the optical indication device 15 emits a light beam 15' with an extension equal to that of the produced logo/trademark. Figure 5 shows in an enlarged view two variants which respectively reproduce a backlit trademark, which thus features a word that identifies the manufacturer for example, or a symbol or logo, which is also backlit.

Again, in figure 5, the optical indication device 15 is provided on the steering handlebar 22, in particular in a position below the control dashboard 24 of the vehicle 1. Therefore, the optical indication device 15 faces the tail end 4 of the vehicle 1. Therefore, in this case, the optical indication device 15 is clearly visible when the user approaches the vehicle 1 to start it. As described above, the optical indication device 15 illuminates with a fixed light after having received and acknowledged the signal S1. In particular, the optical indication device 15 gradually switches on until a fixed light beam is generated. Once the above-described conditions have occurred, the optical indication device 15 switches off with a gradual decrease in the light beam.

According to an advantageous embodiment, the aforesaid optical indication device 15 is a distinct and spatially separated device from the headlight 12 and/or the rear light 14 and/or other lighting and/or signaling devices provided aboard the motorcycle 1, e.g., such as turn signals and/or hazard lights or warning lights or indicators provided in the control dashboard 24. Preferably, the optical indication device 15 is spatially separated from the manual control device 101.

According to a preferred, non-limiting embodiment, again shown in figure 5, the optical indication device 15 is fixed to and/or integrated into the front part 2 of the motorcycle 1, e.g., it is attached to and/or integrated into the front shield 21. More preferably, as in the example depicted in the accompanying figures, the optical indication device 15 is arranged on a wall of the front portion 2, e.g., of the front shield 21, facing in the opposite direction relative to the tail portion 4. In such a case, the optical indication device 15 is a backlit logo or symbol of the vehicle manufacturer.

According to an advantageous embodiment, the manual control device 101 comprises a rotary knob 111 and the locking configuration P0 and the at least one unlocking configuration P1, P2 correspond to positions of the rotary knob 111 which are angularly spaced apart from one another.

For example, the authorization system 100 prevents a rotation of the rotary knob 111 in the locking configuration P0. To such an end, the authorization system 100 comprises a locking element 105, e.g., a pin or piston, which in the locking configuration P0 is such to engage with the rotary knob 111 to prevent the rotation thereof. For example, the locking element 105 in the locking configuration is at least partially inserted into a housing 106 defined in the rotary knob 111. The locking element 105 is adapted and configured to be moved by the electronic control unit 102 and the authorization system 100 comprises, for example, a linear motor, e.g., a solenoid linear motor, in which said pin or piston is the movable equipment and can thus take a forward position to be engaged in the housing 106 and a rearward position to be disengaged from the housing 106.

According to an embodiment, the motorcycle 1 comprises a rechargeable battery 50 adapted to power the authorization system 100 and the optical indication device 15, when it is switched on, is powered by the rechargeable battery 50 through the authorization system 100. In other words, the rechargeable battery 50 powers the authorization system 100, and the authorization system 100 powers the optical indication device 15 when it is switched on. This advantageously allows the optical indication device 15 to be powered independently of a remaining part of the onboard electrical system of the motorcycle 1. According to an advantageous embodiment, the motorcycle 1 comprises an ECU 51 - Engine Control Unit - which can be powered by the rechargeable battery 50 and the authorization system 100, when the manual control device 101 is in the locking configuration P0, inhibits the powering of the ECU 51 by the rechargeable battery 50. For example, the authorization system 100, or the motorcycle 1, comprises a switch 52 which can be electronically controlled by the electronic control unit 102 to interrupt or enable power to the ECU 51 from the rechargeable battery 50 and which clearly, when the manual control device 101 is in the locking configuration P0, interrupts power to the ECU 51.

According to a particularly advantageous embodiment, the electronic control unit 102 of the authorization system 100 is a distinct unit preferably spatially separated from the ECU 51. Advantageously, the electronic control unit 102 can be powered through the rechargeable battery 50 even when power to the ECU 51 is interrupted or disabled.

According to a possible embodiment, the motorcycle 1 comprises a steering handlebar locking device, i.e. a steering lock, operatively connected to the authorization system 100 to assume a locked state when the manual control device 101 takes the locking configuration P0 and to assume an unlocking state when the manual control device 101 takes at least one unlocking configuration P1, P2. In an embodiment, for example, it can be provided that the manual control device 101 is adapted and configured to take a first unlocking configuration P1 and a second unlocking configuration P2. The steering lock is active in the locking configuration P0. Switching from locking configuration P0 to the first locking configuration P1 deactivates the steering lock. In this configuration, it can be provided that it is not yet possible to start the motorcycle 1, in particular to ignite the traction engine 8. For example, the ignition of the motorcycle 1 is only possible when the manual control device 101 is further operated to be taken into the second unlocking configuration P2. For example, in this unlocking configuration P2 a user may act on an ignition button 23 of the motorcycle 1 operatively connected to the ECU 51, e.g., arranged on the steering handlebar 22, to ignite the traction engine 8.

According to an advantageous embodiment, the motorcycle 1 comprises a twilight sensor 150 operationally connected to the electronic control unit 102, and the electronic control unit 102 is programmed and configured to keep the optical indication device 15 off when a given degree of ambient lighting is detected. Conveniently, the twilight sensor 150 is integrated into the optical indication device 15.

An example of a non-limiting operation of the motorcycle authorization control system 100 will be described below 1.

In a condition in which the motorcycle 1 is turned off and is in a parking state, the manual control device 101 is in the locking configuration P0 and, for example, the knob 111 is in the locking position P0. In such a configuration P0, it can be provided that the authorization system 100 may inhibit power to the ECU 51 from the rechargeable battery 50, or otherwise prevent the motorcycle 1 from being ignited. If the motorcycle 1 is provided with a steering lock, it may be provided that the steering lock is in the locked state in the locking configuration P0, i.e., prevents a rotation of the steering handlebar 22 about the steering axis.

An authorized user holding a remote control device 200 logically paired with the authorization system 100 operates the remote control device 200 to emit the radio signal S1.

Upon the reception of the radio signal S1, the authorization system 100 switches the optical indication device 15 on and enables movement of the manual control device 101. The switching on of the optical indication device 15 allows the user to clearly see and recognize the correct activation of the vehicle 1. After switching on, the user can move the manual control device 101 to bring it into the unlocking configuration P1, P2. In particular, if the motorcycle 1 comprises a steering lock device, the user may take the manual control device 101 to the unlocking configuration P1 in which the steering lock device assumes the unlocked state. For example, it can be provided that in such a configuration P1, the optical indication device 15 is still on. It may be further provided that, in such a configuration, the authorization system 100 continues inhibiting the power to the ECU 51 from the rechargeable battery 50, or otherwise continues preventing the ignition of the motorcycle 1.

Starting from the unlocking configuration P1, the user may further move the manual control device 101 to take it to the unlocking configuration P2 and in such configuration the optical indication device 15 is switched off. It may be provided that, in such a configuration P2, the authorization system 100 enables the ECU 51 to be powered by the rechargeable battery 50, or otherwise enables the motorcycle 1 to be ignited, so that, for example, the user can ignite the traction engine 8.

On the other hand, if a preset time interval has elapsed after the radio signal S1 has been transmitted and the optical indication device 15 has been switched on, e.g. 10 s or 20 s have elapsed, without the user having moved the manual control device 101 from the locking configuration P0 to the unlocking configuration P1, P2, then the authorization system turns off the optical indication device 15 and prevents the manual control device 101 from being moved from the locking position P0 to the unlocking position P1, P2.

The example described above relates to the case where motorcycle 1 is provided with a steering lock. On the other hand, in the absence of a steering locking device, it is possible not to provide the intermediate unlocking configuration P1 and the manual control device 101 can be brought from the locking configuration P0 to a single unlocking configuration P2 in which it is possible to ignite the motorcycle 1, i.e., to authorize its ignition and use.

The electronic control unit 102 is configured to intermittently switch the optical indication device 15 on, following a failure to recognize the remote control device 200. In particular, the electronic control unit 102 does not receive the radio signal S1. For example, this is the case if the battery of the remote control device 200 is low or has such a low charge that it does not emit the transmission signal correctly. However, in other cases, the electronic control unit 102 does not receive or recognize the signal due to radio transmission disturbances (radio *jamming*)*.*

According to the invention, the electronic control unit 102 is programmed to allow passive authentication of the remote control device 200 by reading a proximity signal 201 (Fig.6) of the remote control device 200. When this occurs, the user may provide recognition of the remote control device 200 by approaching the latter in a reading zone, in which a transponder 215 is provided. The approaching of the remote control device 200 to the area of the body behind which the transponder 215 is arranged allows the reception of the proximity signal 201 and thus allows the subsequent unlocking and starting operations of the motorcycle 1.

In particular, the transponder 215 is concealed and arranged behind the body, e.g., in the front part facing the saddle, from the side opposite to the manual control device 101. In particular, the body comprises an identification element, which allows a user to easily locate said reading area with the transponder 215. The identification element is preferably an embossed symbol, or printed on the body, which identifies the presence of the transponder 215 behind it. Alternatively, the identification element comprises a light, e.g., a LED light that backlights said identification element.

In a variant embodiment, shown in figure 6 and figure 6A, a housing 210 is provided which comprises the transponder 215. The housing 210 is configured to at least partially receive the remote control device 200. In particular, the housing 210 comprises an opening 211 and is shaped to at least partially achieve a shape coupling with the remote device 200. The housing 210 is preferably arranged in a part of the body of the motorcycle 1, e.g., the tail portion 4, in a position which is partially concealed yet accessible to the user at the same time. For example, the housing 210 may be arranged on the side of the motorcycle 1 in the tail portion 4 below the side fairing, thus not being visible from the outside. At the same time, however, the user can access the housing 210 by passing the hand under the fairing and inserting the remote control device 200 into the housing 210 (Fig. 6A).

Based on the explanation above, it is thus possible to understand how the ridable saddle vehicle 1 of the type described above allows to achieve the purposes indicated above with reference to the prior art.

Indeed, by virtue of the provision of the optical indication device 15, even in low ambient lighting conditions or in the dark an authorized user can determine whether or not the vehicle can be started after the radio enabling signal has been sent. Furthermore, in low ambient light conditions or in the dark, the optical indication device allows a user to be able to recognize their vehicle immediately.

Without prejudice to the principle of the invention, the embodiments and the constructional details may be broadly varied with respect to the above description disclosed by way of non-limiting example, without departing from the scope of the invention as defined in the appended claims.

## Claims

1. A rideable saddle vehicle (1) comprising:
- a main body (2,3,4) which extends along a longitudinal axis (L-L) and has a front part (2), a tail part (4), and a central part (3) interposed between the front part (2) and the tail part (4);
- at least one front wheel (6) and at least one rear wheel (7);
- an engine (8) operatively connected to at least one of said wheels (6,7);
- an optical indication device (15) attached to the main body (2,3,4);
- an authorization system (100) adapted to receive a radio signal (S1) emitted by a remote control device (200) to authorize the ignition of the vehicle (1), wherein the authorization system (100) comprises a manual control device (101) which, following reception of the radio signal (S1), from a locking configuration (P0) is movable by a user to at least one unlocking configuration (P1, P2), wherein the authorization system (100) comprises an electronic control unit (102) operatively connected to the optical indication device (15) to switch it on and off;
wherein the electronic control unit (102) is configured to switch on the optical indication device (15) following the reception of the radio signal (S1) and is configured to switch off the optical indication device (15) when one of the following conditions is fulfilled:
- a time interval has elapsed since the optical indication device (15) was switched on without the manual control device (101) being moved from the locking configuration (P0) to or towards said at least one unlocking configuration (P1, P2);
- the manual control device (101) was moved from the locking configuration (P0) to or towards said at least one unlocking configuration (P1, P2);
**characterized in that:**
- the optical indication device (15) bears a logo or trademark of the vehicle (1) or vehicle manufacturer (1);
- the optical indication device (15) comprises at least one optical backlight source of said logo or trademark;
- said electronic control unit (102) is configured to intermittently switch said optical indication device (15) on following the failure to recognize said remote control device (200) and is programmed to allow passive authentication of said remote control device (200) by reading a proximity signal (201) of said remote control device (200).

2. A rideable saddle vehicle (1) according to claim 1, comprising a transponder (215) provided on the main body (2,3,4) for reading said proximity signal (201) of the remote control device (200).

3. A rideable saddle vehicle (1) according to claim 2, wherein a housing (210) is provided comprising said transponder (215) in which said remote control device (200) is at least partially insertable.

4. A rideable saddle vehicle (1) according to any one of the preceding claims, wherein the optical indication device (15) is arranged on a steering handlebar (22) of said vehicle (1) at the front part (2) facing towards the tail part (4).

5. A rideable saddle vehicle (1) according to any one of claims 1 to 3, wherein the optical indication device (15) is arranged on a wall of the front part (2) facing in the direction opposite to the tail part (4).

6. A rideable saddle vehicle (1) according to any one of the preceding claims, wherein the manual control device (101) comprises a rotary knob (111) and wherein the locking configuration (P0) and said at least one unlocking configuration (P1, P2) correspond to positions of the rotary knob (111) which are angularly spaced apart from one another.

7. A rideable saddle vehicle (1) according to any one of the preceding claims, comprising a rechargeable battery (50) adapted to power the authorization system (100) and wherein the optical indication device (15), when it is switched on, is powered by the rechargeable battery (50) through said authorization system (100).

8. A rideable saddle vehicle (1) according to claim 7, comprising an ECU (51) - Engine Control Unit - which can be powered by the rechargeable battery (50) and wherein the authorization system (100) when the manual control device (101) is in the locking configuration (P0) inhibits the powering of the ECU (51) by the rechargeable battery (50).

9. A rideable saddle vehicle (1) according to any one of claims 1-3 or 5, wherein the front part (2) comprises a steering handlebar (22) and wherein the vehicle (1) comprises a steering locking device operatively connected to the authorization system (100) to assume a locked state when the manual control device (101) assumes the locking configuration (P0) and to assume an unlocked state when the manual control device (101) assumes said at least one unlocking configuration (P1, P2).

10. A rideable saddle vehicle (1) according to any one of the preceding claims, further comprising a twilight sensor (150) operationally connected to the electronic control unit (102) and wherein the electronic control unit (102) is programmed and configured to keep the optical indication device (15) off when a given degree of ambient lighting is detected.

11. A rideable saddle vehicle (1) according to any one of the preceding claims, wherein the rideable saddle vehicle (1) is a motorcycle.

12. A rideable saddle vehicle (1) according to claim 11, wherein said vehicle is a scooter.

## Patentansprüche

1. Fahrbares Sattelfahrzeug (1), umfassend:
- einen Hauptkörper (2,3,4), der sich entlang einer Längsachse (L-L) erstreckt und einen Vorderteil (2), einen Heckteil (4) und einen dazwischen angeordneten Mittelteil (3) aufweist;
- mindestens ein Vorderrad (6) und mindestens ein Hinterrad (7);
- einen Motor (8), der operativ mit mindestens einem der Räder (6,7) verbunden ist;
- eine optische Anzeigevorrichtung (15), die an dem Hauptkörper (2,3,4) angebracht ist;
- ein Freigabesystem (100), das eingerichtet ist, ein Funksignal (S1) zu empfangen, das von einer Fernsteuervorrichtung (200) gesendet wird, um die Einschaltung des Fahrzeugs (1) freizugeben, wobei das Freigabesystem (100) eine manuelle Steuervorrichtung (101) umfasst, die nach Empfang des Funksignals (S1) aus einer Verriegelungskonfiguration (PO) durch einen Benutzer in mindestens eine Entriegelungskonfiguration (P1, P2) beweglich ist, wobei das Freigabesystem (100) eine elektronische Steuereinheit (102) umfasst, die operativ mit der optischen Anzeigevorrichtung (15) verbunden ist, um diese ein- und auszuschalten;
wobei die elektronische Steuereinheit (102) dazu konfiguriert ist, die optische Anzeigevorrichtung (15) nach Empfang des Funksignals (S1) einzuschalten und dazu konfiguriert ist, die optische Anzeigevorrichtung (15) auszuschalten, wenn eine der folgenden Bedingungen erfüllt wird:
- ein Zeitintervall ist vergangen, seit die optische Anzeigevorrichtung (15) eingeschaltet wurde, ohne dass die manuelle Steuervorrichtung (101) aus der Verriegelungskonfiguration (PO) in oder zu der mindestens einen Entriegelungskonfiguration (P1, P2) bewegt wurde;
- die manuelle Steuervorrichtung (101) wurde aus der Verriegelungskonfiguration (PO) in oder zu mindestens einer Entriegelungskonfiguration (P1, P2) bewegt;
**dadurch gekennzeichnet, dass**:
- die optische Anzeigevorrichtung (15) trägt ein Logo oder Warenzeichen des Fahrzeugs (1) oder des Fahrzeugherstellers (1);
- die optische Anzeigevorrichtung (15) umfasst mindestens eine optische Hintergrundbeleuchtungsquelle des Logos oder Warenzeichens;
- die elektronische Steuereinheit (102) ist dazu konfiguriert, die optische Anzeigevorrichtung (15) wechselnd umzuschalten, nachdem die Fernsteuervorrichtung (200) nicht erkannt wurde, und ist programmiert, um die passive Freigabe der Fernsteuervorrichtung (200) durch das Auslesen eines Nährungssignals (201) der Fernsteuervorrichtung (200) zu ermöglichen.

2. Fahrbares Sattelfahrzeug (1) nach Anspruch 1, umfassend einen Transponder (215), der an dem Hauptkörper (2,3,4) vorgesehen ist, um das Nährungssignal (201) der Fernsteuervorrichtung (200) auszulesen.

3. Fahrbares Sattelfahrzeug (1) nach Anspruch 2, wobei ein Gehäuse (210) vorgesehen ist, das den Transponder (215) umfasst, in das die Fernsteuervorrichtung (200) zumindest teilweise einführbar ist.

4. Fahrbares Sattelfahrzeug (1) nach einem der vorhergehenden Ansprüche, wobei die optische Anzeigevorrichtung (15) an einer Lenkerstange (22) des Fahrzeugs (1) an dem Vorderteil (2) angeordnet ist, der zu dem Heckteil (4) gerichtet wird.

5. Fahrbares Sattelfahrzeug (1) nach einem der Ansprüche 1 bis 3, wobei die optische Anzeigevorrichtung (15) an einer Wand des Vorderteils (2) angeordnet ist, die in die entgegengesetzte Richtung zu dem Heckteil (4) gerichtet ist.

6. Fahrbares Sattelfahrzeug (1) nach einem der vorhergehenden Ansprüche, wobei die manuelle Steuervorrichtung (101) einen Drehknopf (111) umfasst und wobei die Verriegelungskonfiguration (PO) und die mindestens eine Entriegelungskonfiguration (P1, P2) Positionen des Drehknopfs (111) entsprechen, die winkelig voneinander beabstandet sind.

7. Fahrbares Sattelfahrzeug (1) nach einem der vorhergehenden Ansprüche, umfassend eine wiederaufladbare Batterie (50), die eingerichtet ist, das Freigabesystem (100) mit Energie zu versorgen, wobei die optische Anzeigevorrichtung (15), wenn sie eingeschaltet wird, über das Freigabesystem (100) von der wiederaufladbaren Batterie (50) mit Energie versorgt wird.

8. Fahrbares Sattelfahrzeug (1) nach Anspruch 7, umfassend eine ECU (51) Motorsteuereinheit, - die von der wiederaufladbaren Batterie (50) mit Energie versorgt werden kann und wobei das Freigabesystem (100), wenn sich die manuelle Steuervorrichtung (101) in der Verriegelungskonfiguration (PO) befindet, die Energieversorgung der ECU (51) durch die wiederaufladbare Batterie (50) verhindert.

9. Fahrbares Sattelfahrzeug (1) nach einem der Ansprüche 1 bis 3 oder 5, wobei das Vorderteil (2) eine Lenkerstange (22) umfasst und wobei das Fahrzeug (1) eine Lenkerverriegelungsvorrichtung umfasst, die operativ mit dem Freigabesystem (100) verbunden ist, um einen verriegelten Zustand einzunehmen, wenn sich die manuelle Steuervorrichtung (101) in der Verriegelungskonfiguration (PO) befindet, und einen entriegelten Zustand einzunehmen, wenn sich die manuelle Steuervorrichtung (101) in der mindestens einen Entriegelungskonfiguration (P1, P2) befindet.

10. Fahrbares Sattelfahrzeug (1) nach einem der vorhergehenden Ansprüche, ferner umfassend einen Dämmerungssensor (150), der operativ mit der elektronischen Steuereinheit (102) verbunden ist, wobei die elektronische Steuereinheit (102) programmiert und dazu konfiguriert ist, die optische Anzeigevorrichtung (15) ausgeschaltet zu halten, wenn ein bestimmtes Niveau Umgebungsbeleuchtung erkannt wird.

11. Fahrbares Sattelfahrzeug (1) nach einem der vorhergehenden Ansprüche, wobei das fahrbare Sattelfahrzeug (1) ein Motorrad ist.

12. Fahrbares Sattelfahrzeug (1) nach Anspruch 11, wobei das Fahrzeug ein Motorroller ist.

## Revendications

1. Véhicule à selle chevauchable (1) comprenant:
- un corps principal (2,3,4) qui s'étend le long d'un axe longitudinal (L-L) et comprenant une partie avant (2), une partie arrière (4) et une partie centrale (3) interposée entre la partie avant (2) et la partie arrière (4);
- au moins une roue avant (6) et au moins une roue arrière (7);
- un moteur (8) connecté de manière opérationnelle à au moins l'une desdites roues (6,7);
- un dispositif d'indication optique (15) fixé au corps principal (2,3,4);
- un système d'autorisation (100) adapté à recevoir un signal radio (S1) émis par un dispositif de télécommande (200) pour autoriser le démarrage du véhicule (1), dans lequel le système d'autorisation (100) comprend un dispositif de commande manuelle (101) qui, suite à la réception du signal radio (S1), est déplaçable par un utilisateur depuis une configuration de verrouillage (P0) vers au moins une configuration de déverrouillage (P1, P2), dans lequel le système d'autorisation (100) comprend une unité de commande électronique (102) connectée de manière opérationnelle au dispositif d'indication optique (15) afin de l'allumer et de l'éteindre;
dans lequel l'unité de commande électronique (102) est configurée pour allumer le dispositif d'indication optique (15) suite à la réception du signal radio (S1) et est configurée pour éteindre le dispositif d'indication optique (15) lorsque l'une des conditions suivantes est remplie:
- un intervalle de temps s'est écoulé depuis l'allumage du dispositif d'indication optique (15) sans que le dispositif de commande manuelle (101) ait été déplacé de la configuration de verrouillage (P0) vers ou en direction d'au moins une configuration de déverrouillage (P1, P2);
- le dispositif de commande manuelle (101) a été déplacé de la configuration de verrouillage (P0) vers ou en direction d'au moins une configuration de déverrouillage (P1, P2);
**caractérisé en ce que**:
- le dispositif d'indication optique (15) porte un logo ou une marque du véhicule (1) ou du fabricant du véhicule (1);
- le dispositif d'indication optique (15) comprend au moins une source de rétroéclairage optique dudit logo ou marque;
- ladite unité de commande électronique (102) est configurée pour allumer de manière intermittente ledit dispositif d'indication optique (15) suite à l'échec de la reconnaissance dudit dispositif de télécommande (200) et est programmée pour permettre l'authentification passive dudit dispositif de télécommande (200) par la lecture d'un signal de proximité (201) dudit dispositif de télécommande (200).

2. Véhicule à selle chevauchable (1) selon la revendication 1, comprenant un transpondeur (215) disposé sur le corps principal (2,3,4) pour la lecture dudit signal de proximité (201) du dispositif de télécommande (200).

3. Véhicule à selle chevauchable (1) selon la revendication 2, dans lequel un logement (210) est prévu comprenant ledit transpondeur (215) dans lequel ledit dispositif de télécommande (200) est au moins partiellement insérable.

4. Véhicule à selle chevauchable (1) selon l'une quelconque des revendications précédentes, dans lequel le dispositif d'indication optique (15) est disposé sur un guidon de direction (22) dudit véhicule (1) au niveau de la partie avant (2) orienté vers la partie arrière (4).

5. Véhicule à selle chevauchable (1) selon l'une quelconque des revendications 1 à 3, dans lequel le dispositif d'indication optique (15) est disposé sur une paroi de la partie avant (2) orientée dans la direction opposée à la partie arrière (4).

6. Véhicule à selle chevauchable (1) selon l'une quelconque des revendications précédentes, dans lequel le dispositif de commande manuelle (101) comprend un bouton rotatif (111) et dans lequel la configuration de verrouillage (P0) et ladite au moins une configuration de déverrouillage (P1, P2) correspondent à des positions du bouton rotatif (111) qui sont angulairement espacées les unes des autres.

7. Véhicule à selle chevauchable (1) selon l'une quelconque des revendications précédentes, comprenant une batterie rechargeable (50) adaptée à alimenter le système d'autorisation (100) et dans lequel le dispositif d'indication optique (15), lorsqu'il est allumé, est alimenté par la batterie rechargeable (50) via ledit système d'autorisation (100).

8. Véhicule à selle chevauchable (1) selon la revendication 7, comprenant une unité de commande moteur (51) - ECU (Engine Control Unit) - pouvant être alimentée par la batterie rechargeable (50) et dans lequel le système d'autorisation (100), lorsque le dispositif de commande manuelle (101) est en configuration de verrouillage (P0), inhibe l'alimentation de l'ECU (51) par la batterie rechargeable (50).

9. Véhicule à selle chevauchable (1) selon l'une quelconque des revendications 1 à 3 ou 5,
dans lequel la partie avant (2) comprend un guidon de direction (22) et dans lequel le véhicule (1) comprend un dispositif de verrouillage de direction connecté de manière opérationnelle au système d'autorisation (100) pour adopter un état verrouillé lorsque le dispositif de commande manuelle (101) adopte la configuration de verrouillage (P0) et pour adopter un état déverrouillé lorsque le dispositif de commande manuelle (101) adopte ladite au moins une configuration de déverrouillage (P1, P2).

10. Véhicule à selle chevauchable (1) selon l'une quelconque des revendications précédentes, comprenant en outre un capteur crépusculaire (150) connecté de manière opérationnelle à l'unité de commande électronique (102) et dans lequel l'unité de commande électronique (102) est programmée et configurée pour maintenir le dispositif d'indication optique (15) éteint lorsqu'un degré donné d'éclairage ambiant est détecté.

11. Véhicule à selle chevauchable (1) selon l'une quelconque des revendications précédentes, dans lequel le véhicule à selle chevauchable (1) est une motocyclette.

12. Véhicule à selle chevauchable (1) selon la revendication 11, dans lequel ledit véhicule est un scooter.
